Europäisches Patentamt

(19) European Patent Office

Office européen des brevets

(11) EP 0 535 196 B1

(12) **EUROPÄISCHE PATENTSCHRIFT**

(45) Veröffentlichungstag und Bekanntmachung des Hinweises auf die Patenterteilung:
**02.10.1996 Patentblatt 1996/40**

(51) Int Cl.⁶: **G01S 13/34**

(21) Anmeldenummer: 92908412.7

(22) Anmeldetag: **15.04.1992**

(86) Internationale Anmeldenummer:
**PCT/EP92/00848**

(87) Internationale Veröffentlichungsnummer:
**WO 92/18876 (29.10.1992 Gazette 1992/27)**

(54) **VERFAHREN UND ANORDNUNG ZUR ABSTANDSMESSUNG NACH DEM RÜCKSTRAHLPRINZIP RADAR**

PROCESS AND ARRANGEMENT FOR RETROREFLECTIVE MEASUREMENT OF DISTANCE

PROCEDE ET DISPOSITIF POUR LA MESURE DE DISTANCE SELON LE PRINCIPE DE LA RETROREFLECTION

(84) Benannte Vertragsstaaten:
**DE GB NL SE**

(30) Priorität: **18.04.1991 DE 4112710**

(43) Veröffentlichungstag der Anmeldung:
**07.04.1993 Patentblatt 1993/14**

(73) Patentinhaber: **ENDRESS + HAUSER GMBH + CO.**
**D-79689 Maulburg (DE)**

(72) Erfinder:
• **WIESBECK, Werner**
**D-7538 Ellmendingen (DE)**
• **KEHRBECK, Jürgen**
**D-7505 Ettlingen 6 (DE)**

• **HEIDRICH, Jürgen**
**D-7500 Karlsruhe 21 (DE)**

(74) Vertreter: **Leiser, Gottfried, Dipl.-Ing. et al**
**Prinz & Partner,**
**Manzingerweg 7**
**81241 München (DE)**

(56) Entgegenhaltungen:
**EP-A- 0 181 808          EP-A- 0 270 148**
**WO-A-90/13049          DE-A- 3 203 677**

• **LUEGER "Lexikon der Technik" 4. Auflage, Band 14: "Fein- werktechnik" 1969, DEUTSCHE VERLAGS-ANSTALT GMBH, STUTTGART, siehe Abbildung Seite 276**

**Beschreibung**

Die Erfindung betrifft ein Verfahren zur Abstandsmessung nach dem Rückstrahlprinzip, bei welchem aufgrund eines periodisch frequenzmodulierten elektrischen Sendesignals eine Sendewelle mit der Frequenz des Sendesignals, d.h. der Sendefrequenz ausgesendet wird, die an einem Ziel reflektierte Echowelle in ein elektrisches Empfangssignal mit der Frequenz der Echowelle, d.h. der Empfangsfrequenz umgesetzt wird, die Sendefrequenz und die Empfangsfrequenz mittels einer konstanten Referenzfrequenz in einem gemeinsamen Mischer in ein Sende-Empfangs-Zwischenfrequenzgemisch umgesetzt werden, das eine durch Umsetzung der Sendefrequenz mittels der Referenzfrequenz gebildete Sende-Zwischenfrequenz und eine durch Umsetzung der Empfangsfrequenz mittels der Referenzfrequenz gebildete Empfangs-Zwischenfrequenz enthält, und die laufzeitabhängige Frequenzdifferenz zwischen der Sendefrequenz und der Empfangsfrequenz, d.h. die Abstandsfrequenz, als Maß für den Abstand des Ziels von der Sende-Empfangsstelle aus der Frequenzdifferenz zwischen der Sende-Zwischenfrequenz und der Empfangs-Zwischenfrequenz ermittelt wird, sowie eine Anordnung zur Durchführung des Verfahrens.

Ein Verfahren dieser Art ist aus der DE 32 03 677 A1 bekannt. Es ergibt Vorteile gegenüber Verfahren, bei denen die Abstandsfrequenz unmittelbar durch Differenzbildung zwischen der Sendefrequenz und der Empfangsfrequenz ermittelt wird; da die Sendefrequenz und die Empfangsfrequenz sehr hoch sind und sehr nahe beieinander liegen, ist die durch unmittelbare Differenzbildung zwischen diesen beiden Frequenzen ermittelte Differenzfrequenz sehr stark verrauscht, was eine genaue Abstandsmessung erschwert. Dagegen liegen die durch Umsetzung mittels der Referenzfrequenz erhaltenen Sende- und Empfangs-Zwischenfrequenzen in einem für die Weiterverarbeitung günstigen niedrigeren Frequenzbereich. Die Frequenzdifferenz zwischen diesen beiden Zwischenfrequenzen ist wieder die gesuchte Abstandsfrequenz; sie kann durch Differenzbildung zwischen diesen beiden niedrigeren Frequenzen mit einfacheren Mitteln und mit größerer Genauigkeit ermittelt werden und ist weitgehend rauschfrei.

Eine weitere wesentliche Voraussetzung für die richtige Abstandsmessung nach dem zuvor beschriebenen Verfahren ist die genaue Einhaltung des zeitlichen Verlaufs der Frequenzmodulation der Sendefrequenz. Jede Abweichung von dem vorgeschriebenen zeitlichen Verlauf ergibt Meßfehler. Beispielsweise muß bei der am häufigsten angewendeten linearen Frequenzmodulation jede Nichtlinearität der Modulationskurve vermieden werden. Aus der PCT-Anmeldung WO 90/13049 ist es bei einer Anordnung zur Abstandsmessung nach dem Rückstrahlprinzip bekannt, den Frequenzmodulator durch die Signalverarbeitungsschaltung zu steuern, die auch zur Ermittlung des Abstands aus der Abstandsfrequenz dient. Eine Korrektur der Frequenzmodulation ist mit dieser Anordnung aber nicht möglich, weil der Signalverarbeitungsschaltung nur die Abstandsfrequenz zugeführt wird, die unmittelbar durch Differenzbildung zwischen der Sendefrequenz und der Empfangsfrequenz erhalten wird und in der die Information über die Abweichungen der Frequenzmodulation von dem vorgeschriebenen Verlauf nicht mehr enthalten ist.

Der Erfindung liegt die Aufgabe zugrunde, ein Verfahren der eingangs angegebenen Art zu schaffen, bei dem die genaue Einhaltung des zeitlichen Verlaufs der Frequenzmodulation der Sendefrequenz gewährleistet ist.

Diese Aufgabe wird nach der Erfindung dadurch gelöst, daß die in dem Sende-Empfangs-Zwischenfrequenzgemisch enthaltene Sende-Zwischenfrequenz zur Korrektur der Frequenzmodulation der Sendefrequenz verwendet wird.

Bei der Erfindung wird die Tatsache ausgenutzt, daß die in dem Sende-Empfangs-Zwischenfrequenzgemisch enthaltene Sende-Zwischenfrequenz die gleichen Abweichungen von dem vorgeschriebenen zeitlichen Verlauf der Frequenzmodulation zeigt wie die Sendefrequenz, jedoch auf einem wesentlich niedrigeren Frequenzniveau. Aus der Sende-Zwischenfrequenz können daher Abweichungen der Sendefrequenz von vorgegebenen Sollwerten für verschiedene Zeitpunkte innerhalb einer Modulationsperiode ermittelt und zur Bildung von Korrekturwerten verwendet werden, mit denen die Frequenzmodulation so korrigiert wird, daß die Abweichungen verschwinden. Die Ermittlung der Abweichungen bei der verhältnismäßig niedrigen Sende-Zwischenfrequenz kann mit wesentlichem geringerem Schaltungsaufwand und mit größerer Genauigkeit erfolgen als bei der hohen Sendefrequenz.

Eine Anordnung zur Abstandsmessung nach dem Rückstrahlprinzip mit einem Sendesignalgenerator zur Erzeugung eines periodisch frequenzmodulierten Sendesignals, wenigstens einer Antenne zur Ausstrahlung einer Welle mit der Frequenz des Sendesignals, d.h. der Sendefrequenz, und zum Empfang der an einem Ziel reflektierten Echowelle, die in ein Empfangssignal mit der Frequenz der Echowelle, d.h. der Empfangsfrequenz umgesetzt wird, einem Referenzsignalgenerator zur Erzeugung eines Referenzsignals mit konstanter Referenzfrequenz, einem Mischer, der ein Signal mit der Sendefrequenz, ein Signal mit der Empfangsfrequenz und das Referenzsignal empfängt und ein Sende-Empfangs-Zwischenfrequenzgemisch abgibt, das eine durch Umsetzung der Sendefrequenz mittels der Referenzfrequenz gebildete Sende-Zwischenfrequenz und eine durch Umsetzung der Empfangsfrequenz mittels der Referenzfrequenz gebildete Empfangs-Zwischenfrequenz enthält, und mit einem dem Mischer nachgeschalteten Meßzweig, in dem die laufzeitabhängige Frequenzdifferenz zwischen der Sendefrequenz und der Empfangsfrequenz, d.h. die Abstandsfrequenz, als Maß für den Abstand des Ziels von der Sende-Empfangsstelle aus der Frequenzdifferenz zwischen der Sende-Zwischenfrequenz und der Empfangs-Zwischenfrequenz ermittelt wird, ist nach der Erfindung dadurch gekennzeichnet, daß dem Mischer parallel zu dem Meßzweig ein Korrekturzweig nachgeschaltet ist, in dem die in dem Sende-Empfangs-Zwischenfrequenzgemisch enthaltene Sende-Zwischenfrequenz zur Korrektur der Frequenzmodulation der Sendefrequenz verwendet wird.

Vorteilhafte Ausgestaltungen und Weiterbildungen des Verfahrens und der Anordnung nach der Erfindung sind in den Unteransprüchen gekennzeichnet.

Ein Ausführungsbeispiel der Erfindung wird nachfolgend anhand der Zeichnung beschrieben. In der Zeichnung zeigen:

Fig. 1     das Blockschema einer Anordnung zur Abstandsmessung nach dem Rückstrahlprinzip,

Fig. 2     ein Diagramm des zeitlichen Verlaufs der Sendefrequenz und der Empfangsfrequenz bei der Anordnung von Fig. 1,

Fig. 3     Diagramme der Frequenzspektren von Signalen an verschiedenen Punkten der Anordnung von Fig. 1 und

Fig. 4     Diagramme zur Erläuterung der bei der Anordnung von Fig. 1 durchgeführten Korrektur der Frequenzmodulation.

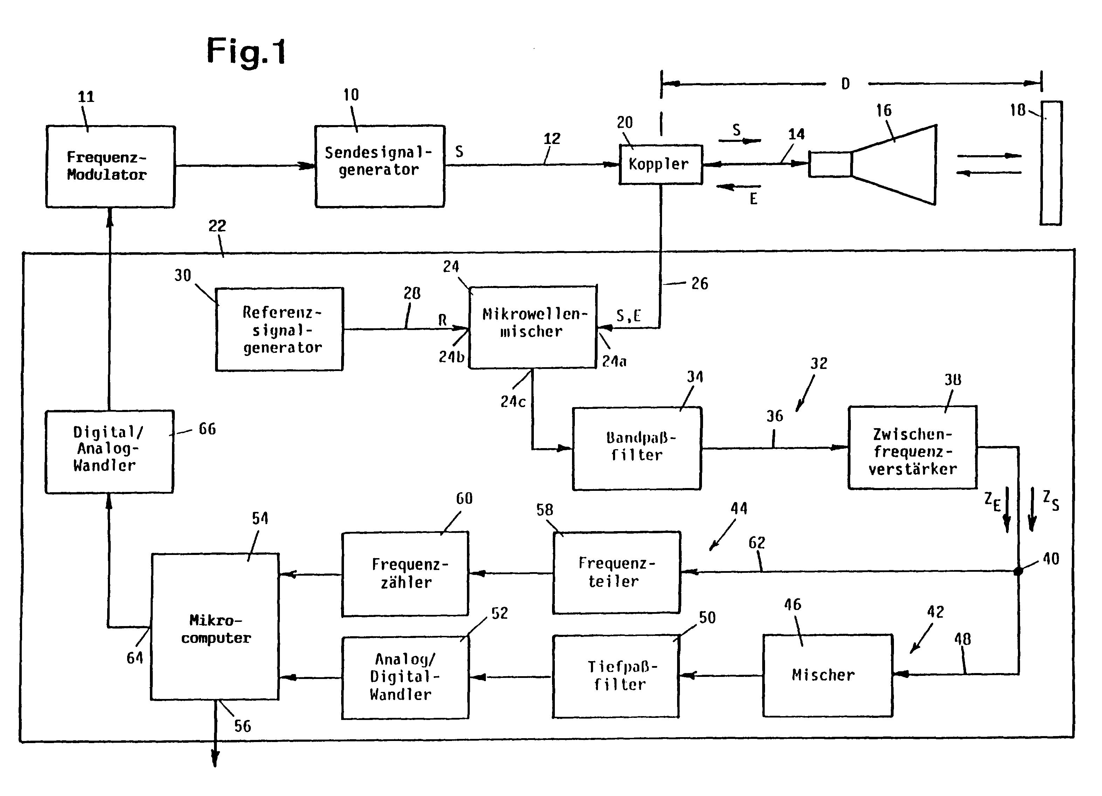

Fig. 1 der Zeichnung zeigt einen Sendesignalgenerator 10, der einen mit einem Frequenzmodulator 11 verbundenen Modulationseingang hat und dessen Ausgang über Leitungen 12 und 14 mit einer Antenne 16 verbunden ist. Der Sendesignalgenerator 10 erzeugt ein hochfrequentes Sendesignal S der Frequenz $f_S$, das über die Leitungen 12, 14 der Antenne 16 zugeführt wird. Die Antenne 16 dient zugleich als Sendeantenne und als Empfangsantenne; sie strahlt eine elektromagnetische Sendewelle mit der Frequenz $f_S$ des Sendesignals aus und empfängt die an einem Ziel 18 reflektierte Echowelle. Aufgrund der empfangenen Echowelle schickt die Antenne 16 durch die Leitung 14 ein Empfangssignal E der Frequenz $f_E$ zurück.

Mittels eines Kopplers 20, der zwischen den Leitungen 12 und 14 angeordnet ist, wird ein Teil des Sendesignals S und das Empfangssignal E ausgekoppelt. Eine an den Koppler 20 angeschlossene Signalverarbeitungsschaltung 22, die nachfolgend noch erläutert wird, ermittelt den Laufzeitunterschied zwischen dem Sendesignal S und dem Empfangssignal E und daraus den Abstand D zwischen dem Koppler 20 und dem Ziel 18.

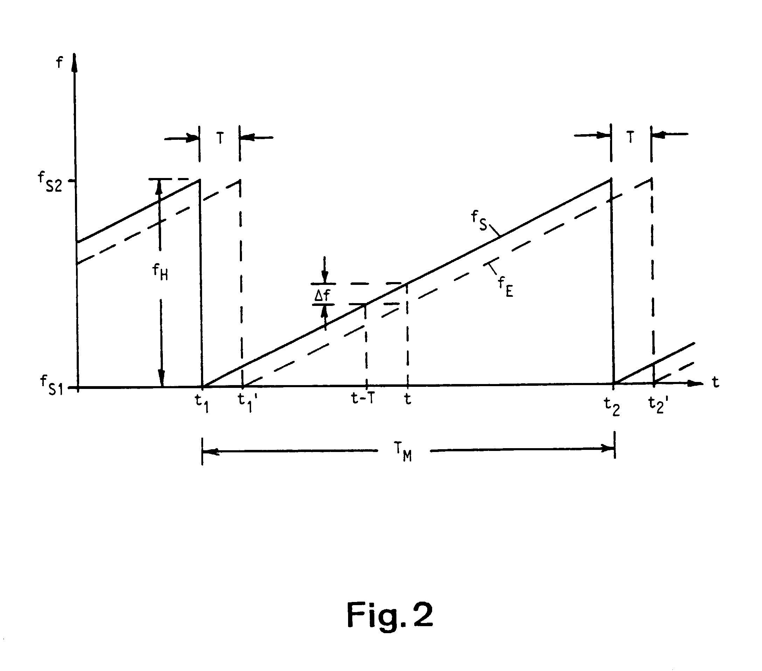

Damit die Signalverarbeitungsschaltung 22 den Laufzeitunterschied zwischen dem Sendesignal S und dem Empfangssignal E ermitteln kann, wird das vom Sendesignalgenerator 10 erzeugte Sendesignal durch den Frequenzmodulator 11 periodisch frequenzmoduliert, wie im Diagramm von Fig. 2 dargestellt ist. Als Beispiel ist angenommen, daß das Sendesignal S ein Dauerstrichsignal ist, das linear sägezahnförmig moduliert ist, so daß die Sendefrequenz $f_S$ jeweils im Zeitpunkt $t_1$ des Beginns jeder Modulationsperiode einen unteren Wert $f_{S1}$ und im Zeitpunkt $t_2$ am Ende jeder Modulationsperiode einen oberen Wert $f_{S2}$ hat und sich im Verlauf der Modulationsperiode zwischen diesen beiden Frequenzwerten ändert. Die Differenz

$$f_H = f_{S2} - f_{S1} \qquad (1)$$

ist der Frequenzhub der Frequenzmodulation, und die Dauer

$$T_M = t_2 - t_1 \qquad (2)$$

ist die Modulationsperiode der Frequenzmodulation. Das Sendesignal S hat also eine zeitabhängige Frequenz $f_S(t)$, die innerhalb jeder Modulationsperiode $T_M$ durch die folgende Gleichung gegeben ist:

$$f_S(t) = f_{S1} + \frac{f_{S2} - f_{S1}}{T_M} \cdot (t-t_1) = f_{S1} + \frac{f_H}{T_M} \cdot (t-t_1)$$

$$(3)$$

Das Empfangssignal E hat die gleichen Frequenzwerte und die gleiche Frequenzmodulation wie das Sendesignal S, es ist jedoch am Ort des Kopplers 20 gegenüber dem Sendesignal S um eine Zeit T verzögert, die gleich der Laufzeit vom Koppler 20 zum Ziel 18 und zurück ist. Die Empfangsfrequenz $f_E$ hat daher gegenüber der Sendefrequenz $f_S$ am Ort des Kopplers 20 den in Fig. 2 gestrichelt dargestellten zeitlichen Verlauf. Jede Modulationsperiode des Empfangssignals E beginnt in einem Zeitpunkt $t_1'$, der um die Laufzeit T gegenüber dem entsprechenden Zeitpunkt $t_1$ des Sendesignals S verzögert ist, und sie endet in einem Zeitpunkt $t_2'$, der um die Laufzeit T gegenüber dem entsprechenden Zeitpunkt $t_2$ des Sendesignals S verzögert ist. Es gelten also die Beziehungen

$$t_1' = t_1 + T \qquad und \qquad t_2' = t_2 + T \qquad (4)$$

Demzufolge hat das Empfangssignal in einem bestimmten Zeitpunkt t die Frequenz

$$f_E(t) = f_{S1} + \frac{f_H}{T_M} \cdot (t-t_1') = f_{S1} + \frac{f_H}{T_M} \cdot (t-t_1-T) \qquad (5)$$

Diese Frequenz $f_E(t)$ ist gleich der Frequenz $f_S(t-T)$, die das Sendesignal S im Zeitpunkt t-T hatte:

$$f_E(t) = f_S(t-T), \qquad (6)$$

und sie ist um einen Wert $\Delta f$ niedriger als die Frequenz $f_S(t)$, die das Sendesignal S im gleichen Zeitpunkt t hat.

Für die Frequenzdifferenz $\Delta f$ ergibt sich aus den Gleichungen (3) und (5):

$$\Delta f = f_S(t) - f_E(t) = f_S(t) - f_S(t-T) = \frac{f_H}{T_M} \cdot T \qquad (7)$$

Dabei sind die Terme $f_H$ und $T_M$ vorgegebene feste Größen der Frequenzmodulation, während die Laufzeit T, je nach dem Abstand D des Ziels, unterschiedliche Werte haben kann. Zwischen der Laufzeit T und dem Abstand D besteht die Beziehung

$$T = 2 \cdot \frac{D}{c} \qquad (8)$$

wenn c die Fortpflanzungsgeschwindigkeit der elektrischen Signale auf der Leitung 14 und der elektromagnetischen Wellen im freien Raum zwischen der Antenne 16 und dem Ziel 18 ist.

Umgekehrt kann man durch Messung der Frequenzdifferenz $\Delta f$ den Abstand D ermitteln. Aus den Gleichungen (7) und (8) folgt:

$$\Delta f = \frac{f_H}{T_M} \cdot \frac{2D}{c} \qquad (9)$$

$$D = \frac{c \cdot T_M}{2 \cdot f_H} \cdot \Delta f \qquad (10)$$

Fig. 2 läßt erkennen, daß die Abstandsfrequenz $\Delta f$ im gesamten Bereich zwischen den Zeitpunkten $t_1'$ und $t_2$ jeder Modulationsperiode konstant ist, wenn die Frequenzmodulation streng linear ist. Der Bereich zwischen den Zeitpunkten $t_1'$ und $t_2$ ist der üblicherweise genutzte Meßbereich.

Die an den Koppler 20 angeschlossene Signalverarbeitungsschaltung 22 ist so ausgebildet, daß sie mit geringem Aufwand eine sehr genaue Messung der Abstandsfrequenz $\Delta f$ ermöglicht und auf einfache Weise eine Korrektur der Frequenzmodulation gewährleistet.

Die Signalverarbeitungsschaltung 22 enthält einen Mikrowellenmischer 24, von dem ein Eingang 24a über eine Leitung 26 mit dem Ausgang des Kopplers 20 verbunden ist. Über diese Leitung werden sowohl ein Teil des Sendesignals S als auch das Empfangssignal E gleichzeitig in ein und denselben Eingang des gemeinsamen Mischers eingespeist. Es wird bewußt keine Entkopplung der beiden Signale vorgenommen. Der andere Eingang 24b des Mikrowellenmischers 24 ist über eine Leitung 28 mit dem Ausgang eines Referenzsignalgenerators 30 verbunden, der ein Referenzsignal R mit der konstanten Referenzfrequenz $f_R$ liefert. Der Mikrowellenmischer 24 liefert am Ausgang 24c außer den Signalen, die den Eingängen 24a und 24b zugeführt werden, auch Zwischenfrequenzsignale, die durch die gegenseitigen Überlagerungen der an den Eingängen 24a und 24b anliegenden Signale S, E und R entstehen. Diese Zwischenfrequenzsignale haben Frequenzen, die den Mischprodukten, also auch den Summen und Differenzen der Frequenzen der überlagerten Signale entsprechen.

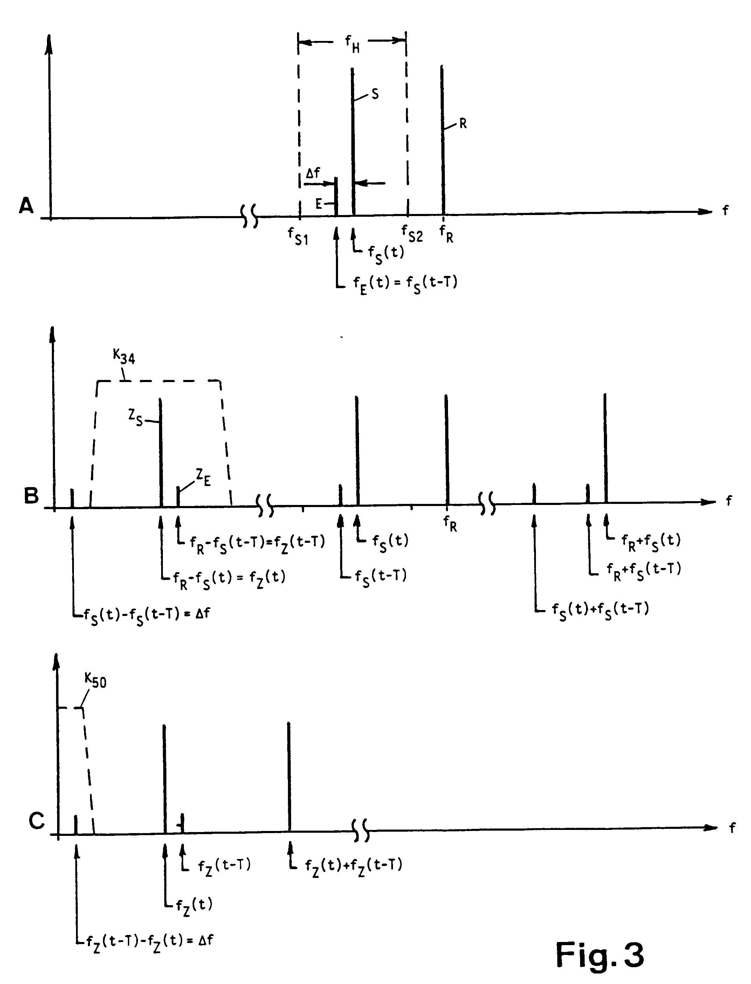

Das Diagramm A von Fig. 3 zeigt das Frequenzspektrum der Signale, die an den Eingängen 24a und 24b des Mikrowellenmischers 24 anstehen. Am Eingang 24a steht zunächst der über den Koppler 20 ausgekoppelte Anteil des Sendesignals S an, der eine beträchtliche Amplitude hat. Das Sendesignal S hat die Augenblicksfrequenz $f_S(t)$, die sich infolge der Frequenzmodulation in dem zwischen den Frequenzen $f_{S1}$ und $f_{S2}$ liegenden Frequenzhubbereich ändert. Das Diagramm A zeigt den Zustand für den in Fig. 2 dargestellten Fall, daß der Zeitpunkt t gerade in der Mitte zwischen den Grenzen $t_1$ und $t_2$ der Frequenzmodulationsperiode $T_M$ liegt.

Ferner steht am Eingang 24a das über den Koppler 20 ausgekoppelte Empfangssignal E an, das eine wesentlich kleinere Amplitude als das Sendesignal S hat. Die Frequenz $f_E(t)$ des Empfangssignals E ändert sich gleichfalls im Frequenzhubbereich der Frequenzmodulation, wobei sie im größten Teil dieses Bereichs den durch die Gleichung (6) definierten Wert

$$f_E(t) = f_S(t\text{-}T)$$

hat, der sich um die Abstandsfrequenz $\Delta f$ von der im gleichen Zeitpunkt t bestehenden Frequenz $f_S(t)$ unterscheidet. Die Frequenzdifferenz $\Delta f$ ist im Diagramm A von Fig. 3 der Deutlichkeit wegen übertrieben groß dargestellt.

Schließlich ist im Diagramm A von Fig. 3 noch die Frequenzlinie des Referenzsignals R dargestellt, das mit verhältnismäßig großer Amplitude am Eingang 24b des Mikrowellenmischers 24 anliegt. Die Frequenz $f_R$ des Referenzsignals R ist konstant; sie ist so gewählt, daß sie oberhalb der höchsten Frequenz $f_{S2}$ des Frequenzhubbereichs liegt.

Das Diagramm B von Fig. 3 zeigt das Frequenzspektrum des Sende-Empfangs-Zwischenfrequenzsignalgemischs am Ausgang des Mikrowellenmischers 24. Außer den bereits im Diagramm A dargestellten Frequenzen sind auch alle Mischprodukte dieser Frequenzen vorhanden, also auch die Differenzfrequenzen

$$f_R \text{ - } f_S(t)$$

$$f_R \text{ - } f_S(t\text{-}T)$$

$$f_S(t) \text{ - } f_S(t\text{-}T) = \Delta f \qquad (11)$$

und die Summenfrequenzen

$$f_R + f_S(t)$$

$$f_R + f_S(t\text{-}T)$$

$$f_S(t) + f_S(t\text{-}T) \qquad (12)$$

Zwischen den Differenzfrequenzen $f_R$ - $f_S(t)$ und $f_R$ - $f_S(t\text{-}T)$ besteht wieder die Frequenzdifferenz $\Delta f$, die der gesuchten Abstandsfrequenz entspricht. Diese Abstandsfrequenz $\Delta f$ ist am Ausgang des Mikrowellenmischers 24 ebenfalls vorhanden; sie wird jedoch an dieser Stelle nicht verwertet, da sie unmittelbar durch Differenzbildung zwischen zwei sehr hohen und sehr nahe beieinanderliegenden Frequenzen entstanden ist und daher stark verrauscht ist. Dagegen liegen die Differenzfrequenzen $f_R$ - $f_S(t)$ und $f_R$ - $f_S(t\text{-}T)$ in einem für die Weiterverarbeitung günstigen Zwischenfrequenzbereich. Die Zwischenfrequenz

$$f_Z(t) = f_R - f_S(t) \qquad (13)$$

entspricht der Differenz zwischen der Referenzfrequenz und der Sendefrequenz und wird daher als Sende-Zwischenfrequenz bezeichnet; das Signal mit dieser Zwischenfrequenz ist das Sende-Zwischenfrequenzsignal $Z_S$. Die Zwischenfrequenz

$$f_Z(t-T) = f_R - f_S(t-T) = f_R - f_E \qquad (14)$$

entspricht der Differenz zwischen der Referenzfrequenz und der Empfangsfrequenz und wird daher als Empfangs-Zwischenfrequenz bezeichnet; das Signal mit dieser Zwischenfrequenz ist das Empfangs-Zwischenfrequenzsignal $Z_E$.

An den Ausgang des Mikrowellenmischers 24 ist ein Zwischenfrequenz zweig 32 angeschlossen, der ein Bandpaßfilter 34 enthält, dessen Ausgang über eine Leitung 36 mit dem Eingang eines Zwischdnfrequenzverstärkers 38 verbunden ist. Die Filterkurve $K_{34}$ des Bandpaßfilters 34 ist im Diagramm B von Fig. 3 gestrichelt dargestellt. Sie ist so ausgelegt, daß der gesamte Änderungsbereich der Zwischenfrequenzen $f_Z(t)$ und $f_Z(t-T)$ im Durchlaßbereich des Bandpaßfilters 34 enthalten ist, während einerseits die niedrigere Differenzfrequenz $f_S(t) - f_S(t-T)$ und andererseits die sehr hohen Eingangsfrequenzen $f_S$, $f_E$ und $f_R$ sowie die noch höheren Summenfrequenzen gesperrt werden. Somit werden nur die Zwischenfrequenzsignale $Z_S$ und $Z_E$ zum rauscharmen Zwischenfrequenzverstärker 38 übertragen, an dessen Ausgang sie verstärkt zur Verfügung stehen.

Am Schaltungspunkt 40 hinter dem Ausgang des Zwischenfrequenzverstärkers 38 teilt sich der Signalweg in zwei parallele Zweige 42 und 44 auf. Der Zweig 42 ist der Meßzweig, in dem die für die Abstandsmessung gesuchte Abstandsfrequenz $\Delta f$ gewonnen wird. Der Zweig 44 ist ein Korrekturzweig, der zur Linearisierung der Frequenzmodulation verwendet wird.

Der Meßzweig 42 enthält einen Zwischenfrequenzmischer 46, dessen Eingang über eine Leitung 48 mit dem Schaltungspunkt 40 verbunden ist. In ähnlicher Weise wie der Mikrowellenmischer 24 gibt der Zwischenfrequenzmischer 46 an seinem Ausgang Signale ab, die die Frequenzen der seinem Eingang zugeführten Signale sowie die Mischprodukte, also auch die Summen und Differenzen dieser Frequenzen haben. Da jedoch die dem Zwischenfrequenzmischer 46 zugeführten Zwischenfrequenzsignale wesentlich niedrigere Frequenzen haben, wird für diesen Zwischenfrequenzmischer kein Mikrowellenmischer benötigt, sondern es genügt ein einfacher Hochfrequenzmischer.

Die Eingangssignale des Zwischenfrequenzmischers 46 sind die Zwischenfrequenzsignale $f_Z(t)$ und $f_Z(t-T)$ gemäß den Gleichungen (18) und (19). Demzufolge erscheint am Ausgang des Zwischenfrequenzmischers 46 ein Signalgemisch mit dem im Diagramm C von Fig. 3 dargestellten Frequenzspektrum, das außer den am Eingang anstehenden Zwischenfrequenzen

$$f_Z(t) = f_R - f_S(t)$$

$$f_Z(t-T) = f_R - f_S(t-T) \qquad (15)$$

auch die Differenz dieser beiden Zwischenfrequenzen

$$f_Z(t-T) - f_Z(t) = \Delta f \qquad (16)$$

sowie die Summe dieser beiden Zwischenfrequenzen

$$f_Z(t-T) + f_Z(t) \qquad (17)$$

enthält.

Das Signal mit der Differenzfrequenz $\Delta f$ ist das gesuchte Abstandssignal, dessen Frequenz die Information über den zu messenden Abstand D enthält. Dieses Signal ist gut auswertbar, da es durch Differenzbildung aus zwei Signalen mit verhältnismäßig niedrigen Frequenzen erhalten worden ist.

Ein an den Ausgang des Zwischenfrequenzmischer 46 angeschlossenes Tiefpaßfilter 50 hat die im Diagramm C von Fig. 3 gestrichelt dargestellte Filterkurve $K_{50}$. Das Tiefpaßfilter 50 läßt die Abstandsfrequenz $\Delta f$ durch, während es die beiden Zwischenfrequenzen $f_Z(t)$ und $f_Z(t-T)$ sowie die noch höhere Summenfrequenz sperrt.

An den Ausgang des Tiefpaßfilters 50 ist ein Analog/Digital-Wandler 52 angeschlossen, dessen Ausgang mit einem Eingang eines Mikrocomputers 54 verbunden ist. Der Analog/Digital-Wandler 52 wandelt das vom Tiefpaßfilter 50 abgegebene Signal mit der Abstandsfrequenz $\Delta f$ in ein für die Verarbeitung im Mikrocomputer 54 geeignetes digitales Signal um, beispielsweise in eine Impulsfolge, deren Folgefrequenz in einem festen Verhältnis zur Abstandsfrequenz $\Delta f$ steht. Der Mikrocomputer 54 ermittelt aus diesem digitalen Signal die Abstandsfrequenz $\Delta f$ und daraus gemäß der Gleichung (13) den zu messenden Abstand D. Er gibt an einem Ausgang 56 ein Signal ab, das den Meßwert für den Abstand D angibt.

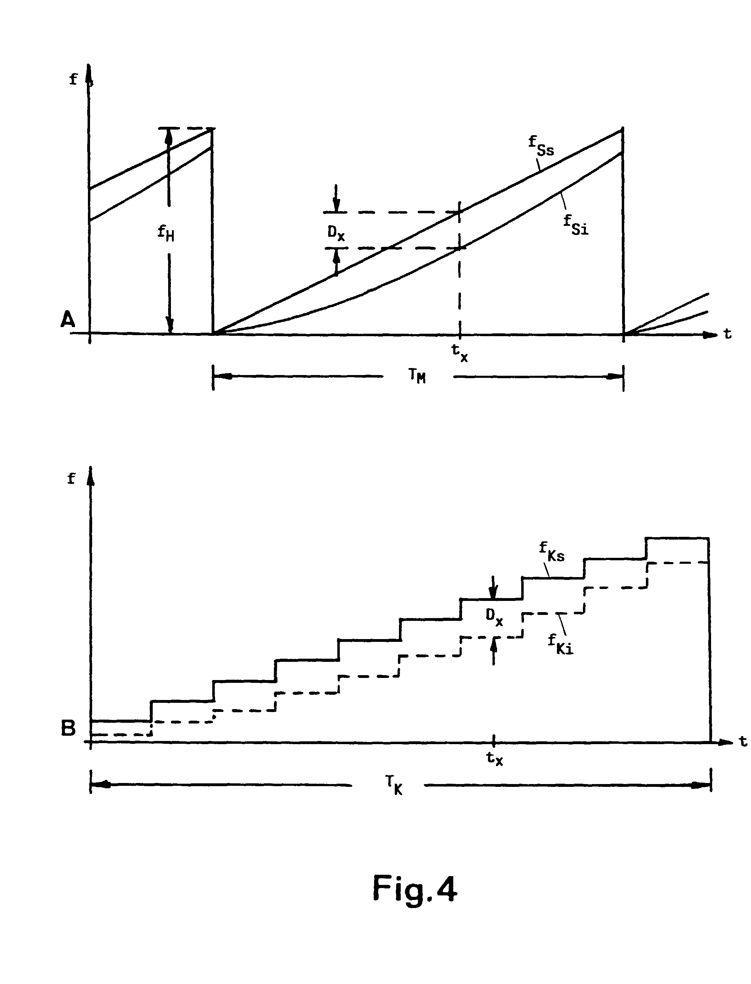

Wie bereits zuvor erwähnt wurde, besteht eine wesentliche Voraussetzung für die genaue Messung des Abstands D nach dem zuvor beschriebenen Verfahren darin, daß die Frequenzmodulation des Sendesignals S streng linear ist. Diese Voraussetzung ist nicht erfüllt, wenn entweder das vom Frequenzmodulator 11 zum Sendesignalgenerator 10 gelieferte Modulationssignal nicht die geforderte Linearität aufweist, oder wenn im Sendesignalgenerator 10 Nichtlinearitäten bestehen, die zur Folge haben, daß die Frequenz des Sendesignals S dem Modulationssignal nicht linear folgt. Im Diagramm A von Fig. 4 zeigt die Kurve $f_{Ss}$ (Sollkurve) den vorgeschriebenen linearen Verlauf der Sendefrequenz $f_S$ im Fall der linearen Sägezahnmodulation von Fig. 2, und die Kurve $f_{Si}$ (Istkurve) zeigt stark übertrieben den wirklichen Verlauf der Sendefrequenz $f_S$ beim Vorliegen einer Nichtlinearität. Für jeden Zeitpunkt $t_x$ innerhalb einer Modulationsperiode $T_M$ hat der Istwert $f_{Si}(t_x)$ vom Sollwert $f_{Ss}(t_x)$ eine Abweichung $D_x$, wobei zu erkennen ist, daß sich die Größe der Abweichung $D_x$ im Verlauf der Modulationsperiode $T_M$ ändert. Die Empfangs frequenz $f_E$, die in Fig. 4 der besseren Übersichtlichkeit wegen nicht dargestellt ist, weist die gleiche Nichtlinearität auf.

Zur Beseitigung der Nichtlinearität muß die Frequenzmodulation so korrigiert werden, daß die Abweichungen $D_x$ zwischen der Istkurve $f_{Si}$ und der Sollkurve $f_{Ss}$ verschwinden. Diese Korrektur der Frequenzmodulation erfolgt mit Hilfe des an den Schaltungspunkt 40 angeschlossenen Korrekturzweigs 44, der einen Frequenzteiler 58 und einen Frequenzzähler 60 enthält. Der Eingang des Frequenzteilers 58 ist über eine Leitung 62 mit dem Schaltungspunkt 40 verbunden. Somit empfängt der Frequenzteiler 58 die am Ausgang des Zwischenfrequenzverstärkers 38 vorhandenen Zwischenfrequenzsignale $Z_S$ und $Z_E$.

Für die Linearisierung der Frequenzmodulation wird nur das Sende-Zwischenfrequenzsignal $Z_S$ verwendet. Zur Trennung der Signale wird die Tatsache ausgenutzt, daß das Sende-Zwischenfrequenzsignal $Z_S$, wie auch im Diagramm B von Fig. 3 angedeutet ist, eine wesentlich größere Amplitude als das Empfangs-Zwischenfrequenzsignal $Z_E$ hat. Der Frequenzteiler 58 ist so ausgebildet, daß er nur auf das Sende-Zwischenfrequenzsignal $Z_S$ mit der größeren Amplitude anspricht. Hierfür kann ein handelsüblicher ECL-Baustein verwendet werden. Der Frequenzteiler 58 teilt die Frequenz $f_Z(t)$ des Sende-Zwischenfrequenzsignals $Z_S$ auf einen Wert herunter, der eine Zählung im Frequenzzähler 60 erlaubt. Durch Zählung der Perioden mit der heruntergeteilten Frequenz in einem vorbestimmten Zeitintervall kann für einen bestimmten Zeitpunkt $t_x$ ein Zählwert erhalten werden, der für den Istwert der Sende-Zwischenfrequenz $f_Z$ und damit auch für den Istwert $f_{Si}(t_x)$ der Sendefrequenz $f_S$ im Zeitpunkt $t_x$ kennzeichnend ist. Die für verschiedene Zeitpunkte $t_x$ innerhalb einer Modulationsperiode $T_M$ erhaltenen Zählwerte werden einem weiteren Eingang des Mikrocomputers 54 zugeführt. Aus diesen Zählwerten kann der Mikrocomputer 54 die Istwerte der Sendefrequenz $f_S$ für die verschiedenen Zeitpunkte $t_x$ ermitteln, durch Vergleich dieser Istwerte mit für die gleichen Zeitpunkte gespeicherten oder von Fall zu Fall berechneten Sollwerten die Abweichungen zwischen der Istkurve und der Sollkurve feststellen und aus diesen Abweichungen Korrekturwerte berechnen. Aufgrund dieser Korrekturwerte wird an einem weiteren Ausgang 64 ein digitales Korrektursignal abgegeben, das in einem an diesen Eingang angeschlossenen Digital/Analog-Wandler 66 in ein Analogsignal umgesetzt wird, das einem Steuereingang des Frequenzmodulators 11 zugeführt wird und die vom Frequenzmodulator 11 bewirkte Frequenzmodulation so verändert, daß die Abweichungen beseitigt werden und somit die Frequenzmodulation linearisiert wird.

Da sich die Modulationskennlinie des Sendesignal generators 10, wenn überhaupt, nur langsam verändert, können die erforderlichen Korrekturwerte nach einer ersten Erfassung der Frequenzwerte im Mikrocomputer 54 abgespeichert werden, worauf es genügt, die abgespeicherten Werte in größeren Zeitabständen zu überprüfen und gegebenenfalls zu berichtigen. Jede Erfassung der Frequenzwerte mit Hilfe des Korrekturzweigs 44 erfolgt vorzugsweise in einem Kalibrierungsintervall, in dem keine Messung des Abstands D stattfindet. In jedem Kalibrierungsintervall wird dem Sendesignalgenerator ein Modulationssignal zugeführt, das eine stufenförmige Modulation vorschreibt, wie im Diagramm B von Fig. 4 dargestellt ist. Jede Stufe des Modulationssignals entspricht einem vorgegebenen Sollwert der Sendefrequenz. Die Kurve $f_{Ks}$ im Diagramm B von Fig. 4 ist die Sollkurve im Kalibrierungsintervall. Im Korrekturzweig 44 wird für jede Stufe durch Zählung der Perioden des Sende-Zwischenfrequenzsignals der zugehörige Istwert der Sendefrequenz ermittelt; daraus ergibt sich die Istkurve $f_{Ki}$ im Kalibrierungsintervall. Durch Vergleich der ermittelten Istwerte mit den vorgegebenen Sollwerten kann für jede Stufe die Abweichung festgestellt und der entsprechende Korrekturwert berechnet und gespeichert werden. Der Vorteil dieser stufenförmigen Modulation besteht darin, daß sich die Frequenz während der Dauer jeder Stufe nicht ändert, was die genaue Messung der Istfrequenz durch Zählung von Perioden erleichtert. Die Dauer $T_K$ des Kalibrierungsintervalls kann beliebig groß sein, insbesondere wesentlich größer als die Dauer $T_M$ der Modulationsperiode; sie wird so groß gewählt, daß die Dauer jeder Stufe ausreichend groß ist, um die der erforderlichen Genauigkeit entsprechende Anzahl von Perioden der Sende-Zwischenfrequenz zählen zu können. Die Berechnung einer begrenzten Anzahl von Korrekturwerten im Frequenzhubbereich ist ausreichend, da eventuell erforderliche Zwischenwerte durch lineare Interpolation erhalten werden können.

Nachdem auf diese Weise die Stufenwerte der Modulationskennlinie bzw. die Korrekturwerte für den gesamten Frequenzbereich im Mikrocomputer 54 abgespeichert worden sind, kann die Messung des Abstands D wieder aufgenommen werden, wobei der Mikrocomputer aufgrund der gespeicherten Werte das für die korrigierte Frequenzmodulation erforderliche Korrektursignal zum Steuereingang des Frequenzmodulators 11 schicken kann.

Während der Meßintervalle, in denen die Messung des Abstands D erfolgt, bilden somit die Schaltungsbestandteile 24, 30, 34, 38, 46, 50, 52 einen Meßkreis, in dem die Abstandsfrequenz $\Delta f$ ermittelt und zur Bestimmung des Abstands D ausgewertet wird. Dabei werden die sehr hochfrequenten Sende-und Empfangssignale mit Hilfe der Referenzfrequenz $f_R$ auf Zwischenfrequenzsignale mit niedrigeren Frequenzen umgesetzt, die einfach zu verarbeiten sind und aus denen insbesondere die Abstandsfrequenz $\Delta f$ genauer und mit bes-

serem Störabstand erhalten werden kann. Während der Kalibrierungsintervalle besteht ein Referenzkreis, der von den gleichen Schaltungsbestandteilen 24, 30, 34, 38 wie der Meßkreis Gebrauch macht und erst ab dem Schaltungspunkt 40 vom Meßkreis abzweigt, wobei in dem Korrekturzweig 44 lediglich der Frequenzteiler 58 und der Frequenzzähler 60 liegen. Durch die weitgehende Doppelausnutzung der Schaltungsbestandteile ergibt sich ein einfacher Schaltungsaufbau mit einer geringen Anzahl von Komponenten. Insbesondere wird für die Realisierung der Schaltung kein Zirkulator benötigt, und von sonstigen Mikrowellen-Bauteilen sind nur ein Koppler und ein Mikrowellenmischer vorhanden, die sowohl im Meßkreis wie im Referenzkreis benutzt werden. Infolge dieses einfachen Aufbaus eignet sich die Schaltung besonders gut zur Realisierung als monolithisch integrierter Schaltkreis.

Die zuvor beschriebene Korrektur der Frequenzmodulation mittels des Korrekturzweigs 44 kann in gleicher Weise angewendet werden, wenn anstelle der zuvor als Beispiel beschriebenen linearen Sägezahnmodulation eine andere lineare Frequenzmodulation angewendet wird, beispielsweise eine symmetrische oder unsymmetrische Dreiecksmodulation, oder auch eine nichtlineare Frequenzmodulation, beispielsweise eine logarithmische Frequenzmodulation.

Natürlich können an dem beschriebenen Ausführungsbeispiel Abänderungen vorgenommen werden, die dem Fachmann geläufig sind. So kann der Sendesignalgenerator 10 anstelle eines periodisch frequenzmodulierten Dauerstrichsignals auch frequenzmodulierte Impulse abgeben, wobei die Impulsdauer gleich der Modulationsperiode ist. Der Frequenzmodulator 11 kann auch in den Mikroprozessor 54 integriert sein, der dann am Ausgang 64 das korrigierte Modulationssignal in digitaler Form abgibt, das nach der Umsetzung im Digital/Analog-Wandler 66 dem Modulationseingang des Sendesignalgenerators 10 zugeführt wird.

Die beschriebene Schaltungsanordnung läßt sich auch dann verwenden, wenn anstelle der in Fig. 1 dargestellten gemeinsamen Sende- und Empfangsantenne zwei Antennen verwendet werden, von denen die eine als Sendeantenne und die andere als Empfangsantenne arbeitet. Die Sendeantenne ist dann in gleicher Weise wie die Antenne 16 von Fig. 1 geschaltet; es ist lediglich erforderlich, das von der Empfangsantenne kommende Empfangssignal auf geeignete Weise dem Mikrowellenmischer 24 zuzuführen.

Schließlich ist die beschriebene Schaltungsanordnung auch nicht auf die Verwendung bei Geräten beschränkt, die elektromagnetische Wellen aussenden und empfangen; sie eignet sich in gleicher Weise für Geräte, die Ultraschallwellen aussenden und empfangen, also nach dem Sonar-Prinzip arbeiten. Der einzige Unterschied gegenüber dem beschriebenen Ausführungsbeispiel besteht dann darin, daß die Antenne einen elektroakustischen Wandler enthält, der das vom Sendesignalgenerator erzeugte elektrische Sendesignal in eine Ultraschallwelle umwandelt, die zum Ziel hin ausgestrahlt wird, und der die vom Ziel reflektierte Ultraschall-Echowelle in ein elektrisches Empfangssignal umwandelt, das durch den Koppler ausgekoppelt wird. Die Funktionsweise der Signalverarbeitungsschaltung 22 bleibt davon unberührt.

## Patentansprüche

1. Verfahren zur Abstandsmessung nach dem Rückstrahlprinzip, bei welchem aufgrund eines periodisch frequenzmodulierten elektrischen Sendesignals eine Sendewelle mit der Frequenz des Sendesignals (S), d.h. der Sendefrequenz ($f_S$) ausgesendet wird (10,20,16), die an einem Ziel reflektierte Echowelle in ein elektrisches Empfangssignal (E) mit der Frequenz der Echowelle, d.h. der Empfangsfrequenz ($f_E$) umgesetzt wird, die Sendefrequenz ($f_S$) und die Empfangsfrequenz ($f_E$) mittels einer konstanten Referenzfrequenz ($f_R$) in einem gemeinsamen Mischer (24) in ein Sende-Empfangs-Zwischenfrequenzgemisch umgesetzt werden, das eine durch Umsetzung der Sendefrequenz ($f_S$) mittels der Referenzfrequenz ($f_R$) gebildete Sende-Zwischenfrequenz ($f_R\text{-}f_S$) und eine durch Umsetzung der Empfangsfrequenz ($f_E$) mittels der Referenzfrequenz ($f_R$) gebildete Empfangs-Zwischenfrequenz ($f_R\text{-}f_E$) enthält, und die laufzeitabhängige Frequenzdifferenz ($f_S\text{-}f_E$) zwischen der Sendefrequenz ($f_S$) und der Empfangsfrequenz ($f_E$), d.h. die Abstandsfrequenz ($\Delta f$), als Maß für den Abstand (D) des Ziels (18) von der Sende-Empfangsstelle aus der Frequenzdifferenz zwischen der Sende-Zwischenfrequenz ($f_R\text{-}f_S$) und der Empfangs-Zwischenfrequenz ($f_R\text{-}f_E$) ermittelt wird, dadurch gekennzeichnet, daß die in dem Sende-Empfangs-Zwischenfrequenzgemisch enthaltene Sende-Zwischenfrequenz ($f_R\text{-}f_S$) zur Korrektur der Frequenzmodulation der Sendefrequenz ($f_S$) verwendet wird.

2. Verfahren nach Anspruch 1, dadurch gekennzeichnet, daß Istwerte der Sende-Zwischenfrequenz ($f_R\text{-}f_S$) für verschiedene Sollwerte der Sendefrequenz ($f_S$) innerhalb des Frequenzhubbereichs und daraus die entsprechenden Istwerte der Sendefrequenz ($f_S$) ermittelt werden, daß die Istwerte der Sendefrequenz ($f_S$) mit den entsprechenden Sollwerten verglichen werden, und daß die Frequenzmodulation zur Beseitigung der beim Vergleich ermittelten Abweichungen geändert wird.

3. Verfahren nach Anspruch 2, dadurch gekennzeichnet, daß die Ermittlung der Istwerte der Sende-Zwischenfrequenz ($f_R\text{-}f_S$) und der Vergleich zwischen den Istwerten und den Sollwerten der Sendefrequenz ($f_S$) in zeitlich im Abstand voneinander liegenden Kalibrierungsintervallen erfolgt, und daß die zur Beseitigung der Abweichungen erforderlichen Korrekturwerte gespeichert und in den Zeiträumen zwischen den Kalibrierungsintervallen zur Korrektur der Frequenzmodulation angewendet werden.

4. Verfahren nach Anspruch 3, dadurch gekennzeichnet, daß in jedem Kalibrierungsintervall die Frequenz ($f_S$) des Sendesignals (S) stufenförmig moduliert wird, und daß für jede Modulationsstufe der zur Beseitigung einer Abweichung zwischen dem Istwert und dem Sollwert der Sendefrequenz ($f_S$) erforderliche Korrekturwert ermittelt und gespeichert wird.

5. Verfahren nach Anspruch 4, dadurch gekennzeichnet, daß für jede Modulationsstufe der Istwert der Sende-Zwischenfrequenz ($f_R$-$f_S$) durch Zählung der Perioden der Sende-Zwischenfrequenz ($f_R$-$f_S$) ermittelt wird.

6. Verfahren nach Anspruch 5, dadurch gekennzeichnet, daß die Sende-Zwischenfrequenz ($f_R$-$f_S$) vor der Zählung der Perioden durch Frequenzteilung herabgesetzt wird.

7. Anordnung zur Abstandsmessung nach dem Rückstrahlprinzip, mit einem Sendesignalgenerator (10) zur Erzeugung eines periodisch frequenzmodulierten Sendesignals (S), wenigstens einer Antenne (16) zur Ausstrahlung einer Welle mit der Frequenz des Sendesignals (S), d.h. der Sendefrequenz ($f_S$), und zum Empfang der an einem Ziel reflektierten Echowelle, die in ein Empfangssignal (E) mit der Frequenz der Echowelle, d.h. der Empfangsfrequenz ($f_E$) umgesetzt wird, einem Referenzsignalgenerator (30) zur Erzeugung eines Referenzsignals (R) mit konstanter Referenzfrequenz ($f_R$), einem Mischer (24), der ein Signal (S) mit der Sendefrequenz ($f_S$), ein Signal (E) mit der Empfangsfrequenz ($f_E$) und das Referenzsignal (R) empfängt und ein Sende-Empfangs-Zwischenfrequenzgemisch abgibt, das eine durch Umsetzung der Sendefrequenz ($f_S$) mittels der Referenzfrequenz ($f_R$) gebildete Sende-Zwischenfrequenz ($f_R$-$f_S$) und eine durch Umsetzung der Empfangsfrequenz ($f_E$) mittels der Referenzfrequenz ($f_R$) gebildete Empfangs-Zwischenfrequenz ($f_R$-$f_E$) enthält, und mit einem dem Mischer (24) nachgeschalteten Meßzweig (42), in dem die laufzeitabhängige Frequenzdifferenz ($f_S$-$f_E$) zwischen der Sendefrequenz ($f_S$) und der Empfangsfrequenz ($f_E$), d.h. die Abstandsfrequenz ($\Delta f$), als Maß für den Abstand (D) des Ziels (18) von der Sende-Empfangsstelle aus der Frequenzdifferenz zwischen der Sende-Zwischenfrequenz ($f_R$-$f_S$) und der Empfangs-Zwischenfrequenz ($f_R$-$f_E$) ermittelt wird, dadurch gekennzeichnet, daß dem Mischer (24) parallel zu dem Meßzweig (42) ein Korrekturzweig (44) nachgeschaltet ist, in dem die in dem Sende-Empfangs-Zwischenfrequenzgemisch enthaltene Sende-Zwischenfrequenz ($f_R$-$f_S$) zur Korrektur der Frequenzmodulation der Sendefrequenz verwendet wird.

8. Anordnung nach Anspruch 7, dadurch gekennzeichnet, daß der Korrekturzweig (44) einen Frequenzzähler (60) zur Zählung der Perioden der Sende-Zwischenfrequenz ($f_R$-$f_S$) sowie einen Mikrocomputer (54) enthält, der aus jedem Zählwert einen Istwert der Sendefrequenz ($f_S$) ermittelt, jeden Istwert mit einem Sollwert vergleicht und auf Grund der Vergleichsergebnisse Korrekturwerte zur Korrektur der Frequenzmodulation der Sendefrequenz berechnet.

9. Anordnung nach Anspruch 8, dadurch gekennzeichnet, daß der Mikrocomputer (54) einen Speicher zur Speicherung der berechneten Korrekturwerte enthält und so ausgebildet ist, daß er die gespeicherten Korrekturwerte bis zur Berechnung neuer Korrekturwerte zur Korrektur der Frequenzmodulation des Sendesignals (S) verwendet.

10. Anordnung nach Anspruch 8 oder 9, dadurch gekennzeichnet, daß dem Frequenzzähler (60) ein Frequenzteiler (58) vorgeschaltet ist, der die Sende-Zwischenfrequenz ($f_R$-$f_S$) auf einen Wert herunterteilt, der die Zählung im Frequenzzähler (60) erlaubt.

11. Anordnung nach Anspruch 10, dadurch gekennzeichnet, daß dem Mischer (24) ein Bandpaßfilter (34) nachgeschaltet ist, das nur den die Sende-Zwischenfrequenz ($f_R$-$f_S$) und die Empfangs-Zwischenfrequenz ($f_R$-$f_E$) enthaltenden Frequenzbereich durchläßt, wobei das Sende-Zwischenfrequenzsignal ($Z_S$) eine wesentlich größere Amplitude als das Empfangs-Zwischenfrequenzsignal ($Z_E$) hat, und daß der Frequenzteiler (58) so ausgebildet ist, daß er nur auf das Sende-Zwischenfrequenzsignal ($Z_S$) mit der größeren Amplitude anspricht.

**Claims**

1. A method for measuring distances using the reflected beam principle, in which on the basis of a periodically frequency modulated electrical transmission signal a transmission wave is transmitted (10,20,16) with the frequency of the transmission signal (S), i.e. the transmission frequency ($f_S$), the echo wave reflected at a target is converted into an electrical reception signal (E) with the frequency of the echo wave, i.e. the reception frequency ($f_E$), the transmission frequency ($f_S$) and the reception frequency ($f_E$) are converted, using a constant reference frequency ($f_R$) and in a common mixer (24), into a transmission/reception intermediate frequencies mixture which contains a transmission intermediate frequency ($f_R$-$f_S$) formed by conversion of the transmission frequency ($f_S$) using the reference frequency ($f_R$), and a reception intermediate frequency ($f_R$-$f_E$) formed by conversion of the reception frequency ($f_E$) using the reference frequency ($f_R$), and the transit time dependent frequency difference ($f_S$-$f_E$) between the transmission frequency ($f_S$) and the reception frequency ($f_E$), i.e. the distance frequency ($\Delta f$), is determined as a measure of the distance (D) between the target (18) and the transmission/reception station from the frequency difference between the transmission intermediate frequency ($f_R$-$F_S$) and the reception intermediate frequency ($f_R$-$f_E$), characterized in that the transmission intermediate frequency ($f_R$-$F_S$) comprised in the transmission/reception intermediate frequencies mixture is utilized for correction of the frequency modulation of the transmission frequency ($f_S$).

2. The method as claimed in claim 1, characterized in that the actual values of the transmission intermediate frequency ($f_R$-$F_S$) are determined for different desired values of the transmission frequency ($f_S$) within the frequency excursion range and from them the corresponding actual values of the transmission frequency ($f_S$) are determined, in that the actual values of the transmission frequency ($f_S$) are compared with the corresponding desired values, and in that the frequency modulation is modified in order to eliminate departures found on comparison.

3. The method as claimed in claim 2, characterized in that the determination of the actual values of the transmission intermediate frequency ($f_R$-$f_S$) and the comparison between the actual values and the desired values of the transmission frequency ($f_S$) takes place in calibration intervals spaced from each other in time and in that the correction values necessary for eliminating the departures are stored and are utilized in the periods between the calibration intervals in order to correct the frequency modulation.

4. The method as claimed in claim 3, characterized in that in each calibration interval the frequency ($f_S$) of the transmission signal (S) is modulated in steps and in that for each modulation step the correction value necessary for eliminating a departure between the actual value and the desired value of the transmission frequency ($f_S$) is determined and stored.

5. The method as claimed in claim 4, characterized in that for each modulation step the actual value of the transmission intermediate frequency ($f_R$-$f_S$) is determined by counting the periods of the transmission intermediate frequency ($f_R$-$f_S$).

6. The method as claimed in claim 5 characterized in that the transmission intermediate frequency ($f_R$-$f_S$) is reduced by frequency division prior to counting of the periods.

7. An arrangement for distance measurement on the basis of the reflected beam principle comprising a transmission signal generator (10) for the production of a periodically frequency modulated transmission signal (S), at least one antenna for the emission of a wave at the frequency of the transmission signal (S), i.e. the transmission frequency ($f_S$), and for the reception of the echo wave reflected at a target, which is converted into a reception signal (E) with the frequency of the echo wave, i.e. the reception frequency ($f_E$), a reference signal generator (30) for the production of a reference signal (R) with a constant reference frequency ($f_R$), a mixer (24) which receives one signal (S) at the transmission frequency ($f_S$), one signal (E) at the reception frequency ($f_E$) and the reference signal (R) and delivers a transmission/reception intermediate frequencies mixture which comprises a transmission intermediate frequency ($f_R$-$f_S$)produced by conversion of the transmission frequency ($f_S$) using the reference frequency ($f_R$) and a reception intermediate frequency ($f_R$-$f_E$) formed by conversion of the reception frequency ($f_E$) using the reference frequency ($f_R$), a measuring channel (42) connected with the output of the mixer (24), in which the transit time dependent frequency difference ($f_S$-$f_E$) between the transmission frequency ($f_S$) and the reception frequency ($f_E$), i.e. the distance frequency ($\Delta f$), is determined as a measure for the distance (D) between the target (18) and the transmission/reception station from the frequency difference between the transmission intermediate frequency ($f_R$-$f_S$)and the reception intermediate frequency ($f_R$-$f_E$), characterized in that a correction channel (44) is connected with the output of the mixer (24) and parallel to the measuring channel (42), in which correction channel the transmission intermediate frequency ($f_R$-$f_S$), comprised in the transmission/reception intermediate frequencies mixture, is utilized for correction of the frequency modulation of the transmission frequency.

8. The arrangement as claimed in claim 7, characterized in that the correction channel (44) comprises a frequency counter (60) for counting the periods of the transmission intermediate frequency ($f_R$-$f_S$) and furthermore a microcomputer (54) which determines an actual value of the transmission frequency ($f_S$) from each count, compares each actual value with a desired value and from the result of comparison calculates correction values for the correction of the frequency modulation of the transmission frequency.

9. The arrangement as claimed in claim 8, characterized in that the microcomputer (54) includes a memory for the calculated correction values and is so designed that it uses the stored correction values until new correction values are computed for the correction of the frequency modulation of the transmission signal (S).

10. The arrangement as claimed in claim 8 or in claim 9, characterized in that the input of the frequency counter (60) is connected to the output of a frequency divider (58) which is adapted to divide the transmission intermediate frequency ($f_R$-$f_S$) down to a value which renders possible counting in the frequency counter (60).

11. The arrangement as claimed in claim 10, characterized in that the output of the mixer (24) is connected with a bandpass filter (34) which only allows the passage of the frequency range comprising the transmission intermediate frequency ($f_R$-$f_S$) and the reception intermediate frequency ($f_R$-$f_E$), the transmission intermediate frequency signal ($Z_S$) having an essentially larger amplitude than the reception intermediate frequency signal ($Z_E$), and that the frequency divider (58) is so designed that it merely responds to the transmission intermediate frequency signal ($Z_S$) with the greater amplitude.

**Revendications**

1. Procédé servant à mesurer les distances selon le principe de réflexion dans lequel, en raison d'un signal d'émission électrique à modulation de fréquence périodique, une onde d'émission ayant la fréquence du signal d'émission (S), c'est-à-dire que la fréquence d'émission ($f_S$) est émise (10, 20, 16), l'onde réfléchie au niveau d'une cible est transformée en un signal de réception électrique (E) ayant la fréquence de l'onde réfléchie, c'est-à-dire que la fréquence de réception ($f_E$) est transformée, la fréquence d'émission ($f_S$) et la fréquence de réception ($f_E$) sont transformées à l'aide d'une fréquence de référence constante ($f_R$) dans un mélangeur commun (24) en un spectre de fréquences intermédiaires de réception et d'émission qui contient une fréquence intermédiaire d'émission ($f_R$-$f_S$) obtenue par transformation de la fréquence d'émission ($f_S$) à l'aide de la fréquence de référence ($f_R$) et une fréquence intermédiaire de réception ($f_R$-$f_E$) obtenue par transformation de la fréquence de réception ($f_E$) à l'aide de la fréquence de référence ($f_R$) et dans lequel la différence ($f_S$ -$f_E$) entre la fréquence d'émission ($f_S$) et la fréquence de réception ($f_E$), dépendant du déroulement dans le temps, autrement dit la fréquence des distances (Df), est déterminée à partir de la différence de fréquence entre la fréquence intermédiaire d'émission ($f_R$-$f_S$) et la fréquence intermédiaire de réception ($f_R$-$f_E$) comme mesure de la distance (D) séparant la cible (18) du point de réception-émission, caractérisé en ce que la fréquence intermédiaire d'émission ($f_R$-$f_S$) contenue dans le spectre de fréquences intermédiaires d'émission et de réception est utilisée pour corriger la modulation de fréquence de la fréquence d'émission ($f_S$).

2. Procédé selon la revendication 1, caractérisé en ce que les valeurs réelles de la fréquence intermédiaire d'émission ($f_R$-$f_S$) sont déterminées, dans la plage de balayage des fréquences, pour différentes valeurs de référence de la fréquence d'émission ($f_S$) et que les valeurs réelles correspondantes de la fréquence d'émission ($f_S$) sont déterminées à partir de celles-ci, en ce que les valeurs réelles de la fréquence d'émission ($f_S$) sont comparées aux valeurs de référence correspondantes et en ce que la modulation de fréquence est modifiée pour supprimer les écarts enregistrés lors de la comparaison.

3. Procédé selon la revendication 2, caractérisé en ce que la détermination des valeurs réelles de la fréquence intermédiaire d'émission ($f_R$-$f_S$) et la comparaison entre les valeurs réelles et les valeurs de référence de la fréquence d'émission ($f_S$) s'effectuent à des intervalles d'étalonnage distants les uns des autres dans le temps et en ce que les valeurs correctives nécessaires à la suppression des écarts sont enregistrées et appliquées entre les intervalles d'étalonnage en vue de la correction de la modulation de fréquence.

4. Procédé selon la revendication 3, caractérisé en ce que la fréquence ($f_S$) du signal d'émission (S) est modulée par palier entre chaque intervalle d'étalonnage et en ce que, pour chaque palier de modulation, la valeur corrective nécessaire à la suppression de l'écart entre la valeur réelle et la valeur de référence de la fréquence d'émission ($f_S$) est déterminée et enregistrée.

5. Procédé selon la revendication 4, caractérisé en ce que, pour chaque palier de modulation, la valeur réelle de la fréquence intermédiaire d'émission ($f_R$-$f_S$) est déterminée en comptant les périodes de la fréquence intermédiaire d'émission ($f_R$-$f_S$).

6. Procédé selon la revendication 5, caractérisé en ce que la fréquence intermédiaire d'émission ($f_R$-$f_S$) est diminuée avant le comptage des périodes par division de la fréquence.

7. Dispositif de mesure des distances selon le principe de réflexion comportant :

> un générateur de signaux d'émission (10) pour la production d'un signal d'émission (S) à modulation de fréquence périodique;
> au moins une antenne (16), pour l'émission d'une onde avec la fréquence du signal d'émission (S), autrement dit la fréquence d'émission ($f_S$), et pour la réception de l'onde réfléchie au niveau d'une cible, qui est transformée en un signal de réception (E) avec la fréquence de l'onde réfléchie, c'est-à-dire la fréquence de réception ($f_E$) ;
> un générateur de signaux de référence (30) pour la production d'un signal de référence (R) à fréquence de référence constante ($f_R$) ;
> un mélangeur (24) qui reçoit un signal (S) avec la fréquence d'émission ($f_S$) , un signal (E) avec la fréquence de réception ($f_E$) et le signal de référence (R), et fournit un spectre de fréquences intermédiaires d'émission et de réception, qui contient une fréquence intermédiaire d'émission ($f_R$-$f_S$) obtenue par transformation de la fréquence d'émission ($f_S$) à l'aide de la fréquence de référence ($f_R$) et une fréquence intermédiaire de réception ($f_R$-$f_E$) obtenue par transformation de la fréquence de réception ($f_E$) à l'aide de la fréquence de référence ($f_R$) ; et
> une branche de mesure (42) installée en aval du mélangeur (24), dans laquelle la différence ($f_S$-$f_E$) entre la fréquence d'émission ($f_S$) et la fréquence de réception ($f_E$), dépendant du déroulement dans le temps, autrement dit la fréquence des distances (Df), est déterminée à partir de la différence de fréquence entre la fréquence intermédiaire d'émission ($f_R$-$f_S$) et la fréquence intermédiaire de réception ($f_R$-$f_E$) comme mesure de la distance (D) séparant la cible (18) du point de réception-émission, caractérisé en ce qu'une branche corrective (44) est installée en aval du mélangeur (24) parallèlement à la branche de mesure (42) dans laquelle la fréquence intermédiaire d'émission ($f_R$-$f_S$) contenue dans le spectre de fréquences intermédiaires d'émission et de réception est utilisée pour corriger la modulation de fréquence de la fréquence d'émission.

8. Dispositif selon la revendication 7, caractérisé en ce que la branche corrective (44) contient un compteur de fréquences (60) pour le comptage des périodes de la fréquence intermédiaire d'émission ($f_R$-$f_S$) ainsi qu'un micro-ordinateur (54) qui détermine à partir de chaque valeur comptée la valeur réelle de la fréquence d'émission ($f_S$), compare chaque valeur réelle avec une valeur de référence et, sur la base des résultats des comparaisons, calcule des valeurs correctives pour corriger la modulation de fréquence de la fréquence d'émission.

9. Dispositif selon la revendication 8, caractérisé en ce que le micro-ordinateur (54) contient une mémoire pour le stockage des valeurs correctives calculées et est conçu de manière à utiliser les valeurs correctives enregistrées jusqu'au calcul de nouvelles valeurs correctives servant à corriger la modulation de fréquence du signal d'émission (S).

10. Dispositif selon la revendication 8 ou 9, caractérisé en ce qu'un diviseur de fréquences (58) est installé en amont du compteur de fréquences (60), le diviseur de fréquences divisant la fréquence intermédiaire d'émission ($f_R$-$f_S$) pour la ramener à une valeur qui permet le comptage dans le compteur de fréquences (60).

11. Dispositif selon la revendication 10, caractérisé en ce qu'un filtre passe-bande (34) est installé en aval du mélangeur (24), ce filtre passe-bande ne laissant passer que la plage de fréquences contenant la fréquence intermédiaire d'émission ($f_R$-$f_S$) et la fréquence intermédiaire de réception ($f_R$-$f_E$), le signal de la fréquence intermédiaire d'émission ($Z_S$) ayant une amplitude sensiblement supérieure à celle du signal de la fréquence intermédiaire de réception ($Z_E$), et en ce que le diviseur de fréquences (58) est conçu de manière à répondre uniquement au signal de la fréquence intermédiaire d'émission ($Z_S$) à amplitude supérieure.

Fig.1

**Fig. 2**

$f_H$

S

R

$\Delta f$

E

A

$f_{S1}$  $f_{S2}$  $f_R$

$f_S(t)$

$f_E(t) = f_S(t-T)$

$K_{34}$

$Z_S$

$Z_E$

B

$f_R - f_S(t-T) = f_Z(t-T)$

$f_R - f_S(t) = f_Z(t)$

$f_S(t)$

$f_S(t-T)$

$f_R$

$f_R + f_S(t)$

$f_R + f_S(t-T)$

$f_S(t) + f_S(t-T)$

$f_S(t) - f_S(t-T) = \Delta f$

$K_{50}$

C

$f_Z(t-T)$

$f_Z(t) + f_Z(t-T)$

$f_Z(t)$

$f_Z(t-T) - f_Z(t) = \Delta f$

Fig. 3

14

Fig.4